# EUROPEAN PATENT APPLICATION

(11) **EP 2 472 867 A1**
(43) Date of publication of application: **04.07.2012**
(21) Application number: 10197420.2
(22) Date of filing: 30.12.2010
(51) Int. Cl.: H04N 7/26, G06T 3/40

(54) **Coding and decoding of multiview videos**

(71) Applicant: Advanced Digital Broadcast S.A., 1292 Chambesy (CH)
(72) Inventor: Paczkowski, Jacek, 65-119, Zielona Góra (PL)
(74) Representative: Di Bernardo, Antonio

(57) **Abstract**

The present invention relates to a method for coding a multiview video stream (100) comprising a plurality of images (104, 105, 106) corresponding to single views of a scene (100) in a fixed time instant. Said method comprises the steps of: dividing each of the images (104, 105, 106) in a plurality of slices; coding (502, 611) each slice; generating a multiview video stream (100) comprising a plurality of separate video streams (101, 102, 103). Each of the separate video streams (101, 102, 103) comprises: a set of the coded slices (401), first information (107a) adapted to define the position of the slices (401) in the images (104, 105, 106) and second information (1 07b) adapted to identify at least one video stream (101, 103) of the multiview video stream (100), wherein the identified video stream (101, 103) comprises at least one slice (404, 405) that, in the scene (100), is adjacent to a slice of the set (401).

The present invention also relates to a method for decoding a multiview video stream, that has been coded according to the above mentioned coding method.

The present invention further relates to a coding apparatus and to a decoding apparatus (4) for multiview video streams.

## Description

### Technical Field

The present invention relates to coding and decoding of multiview videos, i.e. videos sequences containing scenes that can be displayed interactively by changing the view. In particular, the present invention relates to a coding method and a decoding method for a multiview video stream, and a coding apparatus and a decoding apparatus for coding and decoding, respectively, a multiview video stream.

### Background art

In multiview video (MVV), several video sequences of the same scene are acquired, for example trough a plurality of conventional cameras, to produce a plurality of simultaneous videos that can be joined seamlessly. These simultaneous videos can be merged into a multiview video, that can be displayed interactively on a conventional screen display according to the user's wishes, for example rotating the view from multiple angles. This is also referred to as "Free viewpoint television" (FTV) i.e. a system for viewing natural video, that allows the user to interactively control the viewpoint of a scene and to generate new views of a dynamic scene from any position. Moreover, multiview videos can be either in two (2D) or three (3D) dimensions.

Also, multiview videos can be obtained with particular shooting techniques or using 3D virtual modelling. Multi view video provides a better viewing experience for the user, who enjoys the impression of being "inside" the scene. An overview of multiview video techniques can be found in Ishfaq Ahmad, "Multiview Video: Get Ready for Next-Generation Television," IEEE Distributed Systems Online, vol. 8, no. 3, 2007, art. no. 0703-o3006.

Multiview videos can be advantageously applied to several fields, such as: coverage of sports (F1 racing, soccer, football, baseball), surveillance and remote monitoring, entertainment and educational fields.

Multiview video requires real time processing of a massive amount of data; according to the known solution a big computational power would be therefore necessary to process a full multiview video. Since computational power has a cost, expensive video unit would be necessary to process a full multiview video.

### Summary of the invention

It is an object of the present invention to provide a method for coding and decoding a multiview video, that has improved performance while maintains a good level of quality for the user during the interactive experience.

It is another object of the present invention to provide a method for coding and decoding a multiview video that requires a limited amount of computational resources, so that it can be easily implemented in available devices, such as commercial Set-top-boxes, without the need for more powerful processors.

These and further objects of the present invention are achieved by a method for coding a multiview video, a method for decoding a multiview video, a coding apparatus and a decoding apparatus incorporating the features of the annexed claims, which form integral part of the present description.

According to the present invention, a plurality of images corresponding to single views of a scene in a fixed time instant are divided in a plurality of slices. Each of the slices is coded and a multiview video stream is generated which comprises a plurality of separate video streams. Each of these separate video streams comprises: a set of coded slices, information adapted to define the position of the slices within the images and further information adapted to identify one or more video streams that are adjacent to slices of other video streams.

As better explained here below, this coding method generates a MVV which can be decoded efficiently without need for a huge computational power of the decoder.

The decoder receives the plurality of coded video streams and decodes them according to a command provided by a user. The command may require displaying a view which comprises slices from two or more of the images carried by the MVV stream. The decoder selects and decodes the slices associated to the view based on the received command and information embedded in the multiview video stream. The decoder then generates a video image comprising the selected slices ordered so as to generate the view to be displayed.

This solution therefore provides the advantage that it is not necessary to decode the whole multiview video and the view requested by the user can be quickly generated by the decoder by using the information provided with the coded multiview video.

In case of a horizontal multiview video, such as a "panorama", that develops along a main horizontal direction, the slices are vertical. In this case, the slices might undergo a rotation prior to coding and after decoding, so as to take advantage of particular features of the MPEG standards, that provides for individual coding/decoding of horizontal slices. If the slices are rotated during encoding, a piece of information is embedded in the video so as to signal that a counter-rotation is needed after decoding.

All the relevant information, needed to define the configuration of adjacent images in different video streams, and the particular position of the slices therein, is inserted in the video streams of the multiview video stream during coding. By doing this, during decoding of the multiview video this information is promptly available, for example trough the metadata, and the selected view can be correctly displayed.

In general, a different Packet ID can be associated to each slice during coding, so that the decoder can individually decode each slice.

In a preferred embodiment, each image of the video streams is divided in ten vertical slices, of equal size. Since each of the images is of a size adapted to be displayed on a common TV screen, in the image to be displayed there will be pixels from either ten or eleven slices for any given view of the multiview video. Accordingly, only an increase of 10% in computational power is needed to effectively decode the slices, that according to the invention are in fact coded and decoded individually. Thicker or thinner slices can be used, according to the desired performance.

According to one aspect of the invention, slices are preferably selected to have a size multiple of 16 pixels; by doing this, MPEG standard coding and decoding can be efficiently used.

According to a further aspect, the invention is directed to a computer program comprising program code means for performing all the steps of a coding method with the above mentioned features, when it is run on a computer.

According to a further aspect, the invention is directed to computer readable medium storing computer executable instructions performing all the steps of a coding method with the above mentioned features, when it is run on a computer. According to a further aspect, the invention is directed to a computer program comprising program code means for performing all the steps of a decoding method with the above mentioned features, when it is run on a computer.

According to a further aspect, the invention is directed to computer readable medium storing computer executable instructions performing all the steps of a decoding method with the above mentioned features, when it is run on a computer.

### Brief description of the drawings

Further features and advantages of the present invention will become apparent in the detailed description of preferred non-exclusive embodiments of a coding method and of a decoding method, and of relative systems according to the invention, which are described as non-limiting examples with the help of the annexed drawings, wherein:
- Figure 1, schematically represents an example of panoramic image;
- Figure 2 schematically represents a user interacting with a multi-view video apparatus;
- Figure 3 schematically represents an example of images belonging to a multiview video divided in three separate video streams;
- Figure 4 schematically represents the images of multiview video of Figure 3, coded according to an embodiment of the present invention;
- Figure 5 schematically represents an embodiment of the method for coding a multiview video stream according to the present invention;
- Figure 6 schematically represents another embodiment of the method for coding a multiview video stream according to the present invention;
- Figure 7 represents a flowchart of a method for coding a multiview video stream according to the present invention;
- Figure 8 schematically represents an example of a view to be displayed, said view being obtained from a multiview video according to the present invention;
- Figure 9 schematically represents an embodiment of the method for decoding a multiview video according to the present invention;
- Figure 10 schematically represents another embodiment of the method for decoding a multiview video according to the present invention;
- Figure 11 schematically represents an example of interactive view displaying in a multiview video according to the present invention;
- Figure 12 schematically represents another example of interactive view displaying in a multiview video according to the present invention;
- Figure 13 represents a flowchart of a method for decoding a multiview video stream according to the present invention;
- Figure 14 schematically represents an example of decoding apparatus according to the present invention;
- Figure 15 schematically represents another embodiment of the method for decoding a multiview video according to the present invention;
- Figure 16 schematically represents another embodiment of the method for decoding a multiview video according to the present invention;
- Figure 17 schematically represents another example of interactive view displaying in a multiview video according to the present invention.

These drawings illustrate different aspects and embodiments of the present invention and, where appropriate, like structures, components, materials and/or elements in different figures are indicated by the same reference numbers.

### Detailed description of embodiments

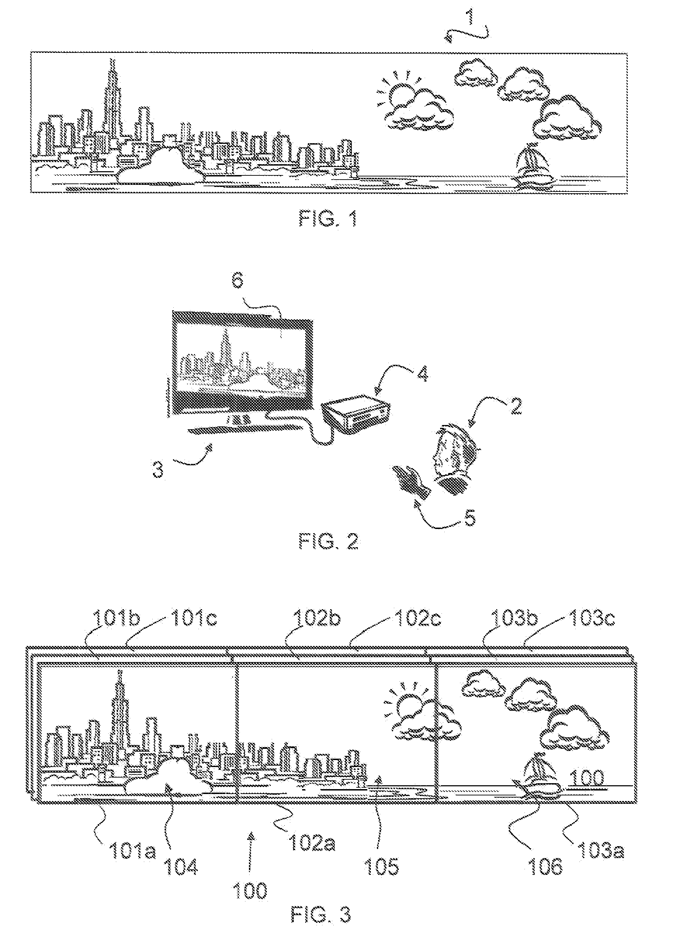

Figure 1 schematically represents a panoramic image 1. The panoramic image (or "panorama") 1 represents a city skyline and a lake. The panorama 1 embraces a large transversal field of view, for example 180 degrees. In order to depict all objects in the image with adequate definition, the image resolution of panorama 10 is very large, for example 5760x1080 pixels.

While it is not possible to display the whole panoramic image 1 without resizing on a conventional TV screen, it is possible to display on a HD screen, having a resolution of 1920x1080 pixels, a particular view of the panorama 1.

Figure 2 schematically represents a user 2 watching a TV screen 3. The TV screen 3 is provided with means for displaying a MVV video, for example an MVV Set-top-box 4. Interacting with the MVV Set-top-box 4, for example trough a remote control 5, the user 2 can select different views to be displayed on the TV screen 3, from a multi-view-video.

In this example, user 2 selects a view from a multiview video comprising image 1. The selected view is represented on the screen as an image 6 that comprises the city skyline (that is, the left part of panorama image 1).

In the present description, the term "multiview video" will indicate a particular video sequence that comprises images from a plurality of views that are adapted to be seamed together. A user can navigate interactively trough the views of the multiview video, watching at particular images or combination of images that are displayed.

With reference to Figure 3 an example of multiview video 100 is now described.

The multiview video 100 comprises a plurality of panoramic video frames each transporting image of a scene, like panoramic image 1. Each panoramic video frame is divided in a plurality of frames, in the example of figure 3 each panoramic frame of multiview video 100 is divided in three frames; in this embodiment, multiview video 100 is therefore shown comprising a plurality of frames 101a, 102a, 103a, 101 b, 102b, 103b, 101 c, 102c, 103c. In this example, particular views of panoramic image 1 are comprised in a group of frames 101 a, 102a and 103a. As each frame carries an image, the multiview video stream 100 comprises a plurality of images 104, 105 and 106, each representing a different particular view of the same scene.

A user can navigate through the views of the multiview video 100, preferably by scrolling the view from left to right, displaying simultaneously only a portion from two adjacent images of the video images 104, 105 and 106. In the meanwhile, the video images 104, 105 and 106 of the multiview video 100 synchronously change, by updating frames according to a frequency, for example updating frames 101 a, 101 b and 101 c, and so on.

The multiview video stream 100 has a resolution of 5760x1080 pixels and is divided into three individual video HD streams to which images 101, 102 and 103 belong; each of said images has a resolution of 1920x1080 pixels. The multiview video stream 100 is divided into a plurality of common HD video streams, essentially for broadcasting purposes. Each portion of the video streams 101, 102 and 103 is broadcasted synchronously with the others, over one or more transport streams (for DVB-T) or transponders (for satellite broadcasting, i.e. DVB-S) so that the user receives the whole multiview video 100 trough traditional receiving means, such as a Set-top-box or a television set.

Therefore, while it is possible for traditional Set-top-boxes to receive each of the video streams 101, 102 and 103, a MVV Set-top-box allows for interactively displaying particular views of the whole multiview video transported partially by each video stream 101, 102 and 103.

In this example, images 104, 105 and 106 are oriented horizontally and juxtaposed side by side, so that they equal the sizes of the panorama image 1.

The multiview video 100 is in general meant to be displayed according to a single view, for example on 16:9 HD screen so that only a portion of it is visible as a video image on the screen at a given time.

Multiview video 100 is coded in such a way that each of images 104, 105 and 106 of the video streams 101, 102 and 103 comprised in multiview video 100 is divided in a plurality of slices.

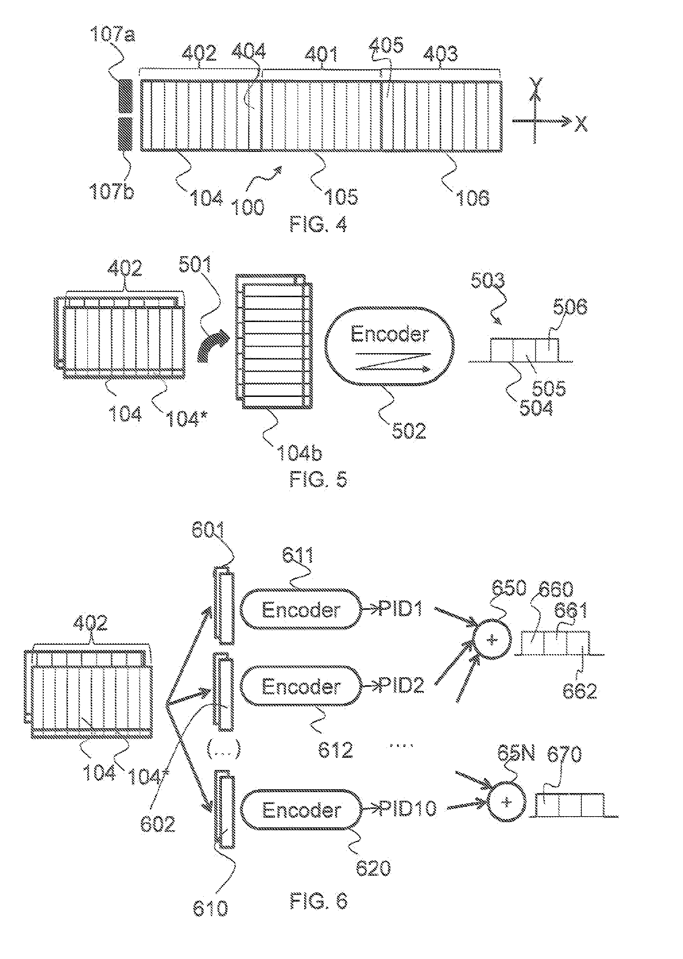

With reference to the example of Figure 4, each of images 104, 105 and 106 is divided in vertical slices. Preferably each image is divided in a set (401, 402 and 403 respectively) of ten slices.

The prevalent orientation of these slices, in general, is advantageously chosen such that the slices have a prevalent dimension that is orthogonal to a predetermined main direction X, that is the direction of scrolling the view in the multiview video and along which the scene of the multiview video 100 develops. As it will become apparent in the following description, the feature of having the slices sectioned along the direction Y, orthogonal to X, allows for a better use of computational resources during the decoding and the navigation by scrolling of the views of the multiview video.

In the referenced example, multiview video 100 is prevalently horizontal, since all the images 104, 105 and 106 are disposed horizontally side by side. In this example, a user changing views in the multiview video 100 would scroll along the horizontal direction (i.e. to left and right) displaying different views, preferably adjacent views, of the multiview video 100. Therefore, in this example it is advantageous to have the slices of images 104, 105 and 106 displaced such that their prevalent dimension is vertical. Each of the slices comprises the whole height of the images 104, 105 and 106.

In addition to the slices of images 104, 105 and 106, the multiview video 100 also carries the information 107a adapted to define the position of the slices within the images 104, 105 and 106. Moreover, multiview video 100 carries information 107b adapted to identify the video streams 101, 102 and 103. In particular, information 107b indicates whether each video stream is adjacent to a slice of another video stream. In this example, the video stream 102 is adjacent with its left side with slice 404 of image 104, and adjacent with its right side with slice 405 of image 106. Preferably, this information 107a and 107b is embedded in the metadata of the multiview video 100. In a preferred embodiment, this information is available in each metadata of each video stream 104, 105 and 106 (that summed up, make the "global" metadata of the multiview video 100), with a certain degree of redundancy (up to complete replication of information in the metadata of each video stream) so as to assure robust transmission of information together with broadcasting of the multiview video 100. As already described, the multiview video stream 100 is divided in a plurality of video streams 101, 102 and 103 of smaller sizes. All of these video streams can all have an equal size between each other, or be of different sizes. Each image 104, 105 and 106 of the video streams is divided in a plurality of slices that are vertical slices in the example of Figure 4.

Each of the video streams 101, 102 and 103 subsequently undergoes a coding step, either in sequence or in parallel wherein the slices of each image 104, 105 and 106 are individually coded.

With reference to Figure 5, an example of the coding of the multiview video stream 100 is described.

For sake of brevity, only the coding of one video stream 101 of the multiview video stream 100 is herein described.

Video stream 101 comprises a plurality of frames (101a, 101b,..) each one carrying a respective image.

In the preferred embodiment, video system undergoes an MPEG compression, the term MPEG compression is considered to encompass any known MPEG standard compression, like MPEG-2, MPEG-3, MPEG-4 and MPEG-7 compression.

In this embodiment, each frame carries a 1920x1080 pixels Full HD image, therefore the method provides for adding 8 lines of pixels at the bottom of each image in order to let the frame undergo a correct MPEG coding. These lines are not added if coding is a JPEG coding wherein compression is based on 8x8 macroblocks, or if coding makes use of macroblocks different from 16x16; as an example h.264 coding allows using from 4x4 to 16x16 macroblocks.

Each of the slices of set 402 undergoes a 90 degrees rotation 501, so that all the slices of image 104 become horizontal in image 104b. This is advantageous in combination with MPEG standards, that predicts for coding horizontal slices as independent sub-frame units.

In this embodiment, wherein each frame of the video stream undergoes a rotation 501, a third information representative of the rotation, such as a "flag", is inserted in the multiview video stream 100.

Each of the slices is therefore individually encoded by encoder 502, that proceeds on horizontal separate slices. To the purpose of the present invention, individually coding means that each slice is treated as a subframe unit whose coding depends on features of pixels present in the subframe unit and in corresponding subframe units present in other frames, but not on features present in other slices/subframe units of the same frame.

Encoder 502 outputs an encoded video stream comprising all the encoded slices. The encoded video stream together with metadata and other information is then put into a container format (in particular an MPEG program stream) 504 adapted to be broadcast.

In the case of digital broadcasting, like DVB, the encoded video signal is input on a single program stream 504 of a transport stream 503 (for digital video broadcasting).

As already described, all of the plurality of video streams 101, 102 and 103 comprised in the multiview video 100 are coded and put into a corresponding plurality of program streams to be subsequently broadcasted.

As multiview video is composed of three video streams 101,102 and 103, multiview video 100 is preferably encoded and embedded in three program streams of the same transport stream, e.g. transport stream 503.

With reference to Figure 6, another solution for coding a multiview video stream is described.

The method for coding is hereby described with reference to a single video stream 101, yet all the video streams 101, 102 and 103 comprised in the multiview video 100 undergo, either in sequence or in parallel to the same process.

Each image of the video stream 101 undergoes to a similar decomposition process as the one described with reference to figure 5.

Image 104 (eventually expanded to add bottom lines necessary for correct MPEG coding) is divided in a set of ten vertical slices 601, 602, ..., 610 of equal size. Differently from the embodiment of figure 5, each of slices 601-610 of image 104 is processed as a frame of a respective video stream that need to be coded.

This is shown in figure 6, wherein a plurality of encoders 611, 612, ..., 620 encodes a respective sequence of slices.

Each encoder 611-620 therefore generates a corresponding encoded video which is packetised and embedded into a corresponding container format, e.g. an MPEG program stream. As it is per se known, a program stream is a sequence of program stream packets, each one being assigned a different identifier; in figure 6 each frame of video stream 101 gives rise to a set of elementary packets that are embedded in different program stream packets identified by a different Packet ID (PID): PID1, PID2, PID.... PID10.

Several multiplexers 650-65N combines groups of program streams 660-670 (preferably groups of three program streams) and broadcast them.

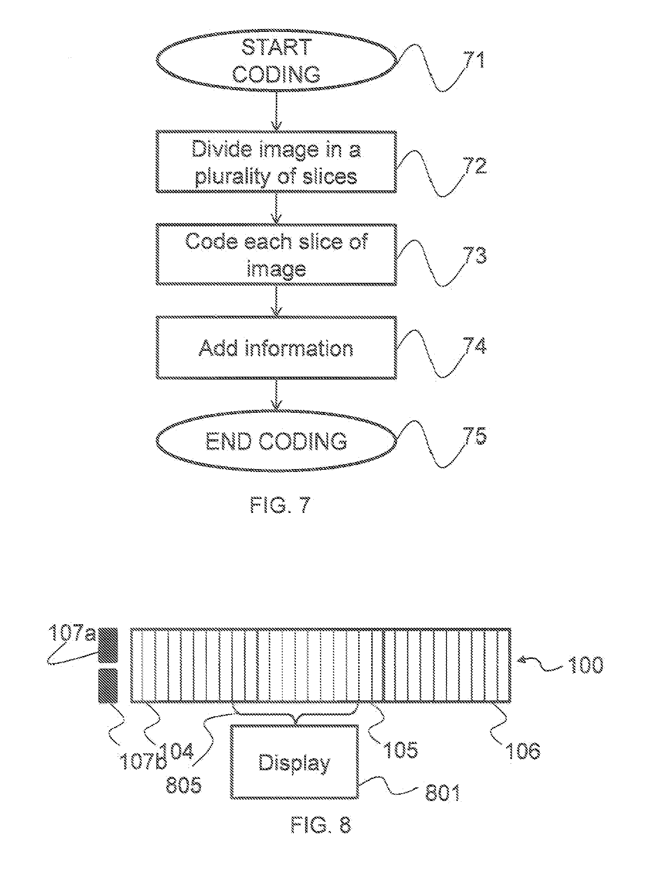

Figure 7 schematically represents a flowchart of the coding steps necessary to code a multiview video stream according to the present invention.

The coding method starts at step 71, when coding of the multiview video is initiated.

Each frame (and consequently the image contained therein) of the multiview video is divided (step 72) in a plurality of slices. Each of the slices is individually coded (step 73) and mixed (step 74) with information necessary to decoding, so as to obtain an encoded video stream.

Information mixed to the coded slices comprises information relative to the mutual displacement of the slices within an image and information relative to adjacent slices of other video streams.

At step 75, the coding of the image is terminated.

The flow chart of figure 7 discloses only important steps of the coding method, other steps, like packetizing of the encoded video stream, addition of lines to the frames in order to obtain extended images suitable for MPEG coding, and so on, can be added to the steps of figure 7.

With reference to Figure 8, an example of interactive view display of a multiview video according to the present invention is described.

The multiview video 100 is broadcasted and then received by a receiving apparatus, such as a Set-top-box or a TV set. To exploit the multiview features of the video, the apparatus can be a MVV Set-top-box that allows changing views interactively.

Information 107a and 107b embedded in the metadata of the multiview video 100 (i.e. in at least one of the program streams transporting encoded video streams 101, 103 or 103) allows for determining the correct configuration of the multiview video 100, i.e. determining the position of the slices and the mutual displacement of the video streams 101, 102 and 103.

Since, as is usually the case, the resolution of the multiview video 100 largely exceeds the resolution of a TV screen, a particular view of the multiview video 100 is displayed according to a selection of the user or to certain settings of the receiving apparatus.

As an example, the particular view to be displayed can be selected by the user, or can be a predetermined selection or an automatic selection (especially upon starting or resetting the MVV Set-Top-box, or upon tuning on a different MVV channel).

In one preferred embodiment, the view is independent from the frames and images originally composing the multiview video stream before encoding. In other words, as explained better with reference to the example of figure 8, if a multiview video reproduce a scene in different time instants by means of different video sequences each carrying a certain view of the scene, the view to be displayed can be different from these views.

In the example of figure 8, panorama 1 is divided in three images 104, 105 and 106 reproducing different "original" views.

The view 801 to be displayed comprises the pixels of the set of slices 805. In detail, the view is constituted of the two far right slices of image 104 and the eight slices from the left of image 105, for a total of ten slices. View 505 is therefore different form the original views of images 104, 105 and 106.

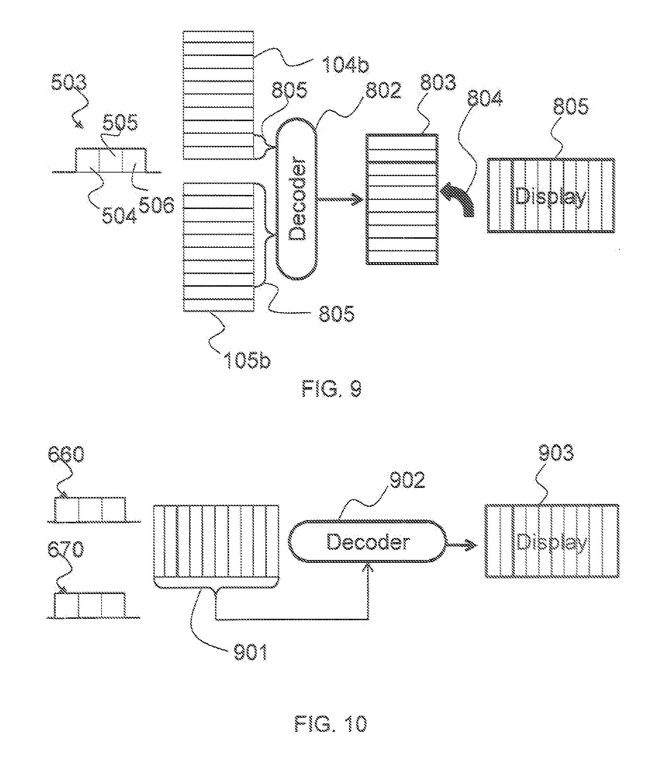

Decoding of view 505 at the receiving apparatus is hereby described with reference to Figure 9, wherein multiview video stream 100 is encoded according to the method above described with reference to figure 5.

The receiving apparatus therefore receives several transport streams (between those transport stream 503) transporting the encoded multiview video stream 100. Transport stream 503 comprises in particular the program stream 504 embedding packets relative to coded image 104, the program stream 505 embedding packets relative to coded image 105 and the program stream 506 embedding packets relative to coded image 106. From transport stream 503, therefore, the coded images 104b and 105b are received.

Using information 107a and 107b embedded in the received metadata, a control unit of the receiving apparatus selects the encoded slices 801 corresponding to slices 805 constituting the view 801 to be displayed.

Encoded slices 801 are provided to decoder 802 which decodes them in an individual manner, and assembles them in a video image 803.

Since the slices of images 104b and 105b are horizontally coded by encoder 502, the decoder 802 can individually decode these horizontal slices as if they were separated.

In other words, decoder 802 only needs to decode the slices of the multiview video 100 that are actually selected for display in the selected view 801. The other slices that are extraneous to the selection 801 are not decoded, thus not occupying computational power of the decoder without actual benefit.

Video image 803 comprising the selected slices has to undergo a rotation 804 that is equal and opposite to rotation 501, in this example -90 degrees. This information is, again, provided in the metadata of video 100 or of videos 102 and 103 to which image 104 and 105 belong.

After rotation 804, the video image 805 is obtained. Video image 805 comprises, and is in particular equal to, the selected view 801, after the plurality of selected slices has been decoded. Video image 805 can be displayed on a conventional TV screen and represents the selected view 801 of the multiview video 100.

Figure 10 schematically shows the steps to be taken to decode a multiview video stream 100 encoded according to the embodiment of figure 6.

The receiving apparatus receives a plurality of transport streams comprising a plurality of program streams 660-66N transporting the encoded and packetized slices 601-610.

As explained above, each of encoded slices 601-610 is packetized and embedded into a different program stream identified by a PID (PID1-PID10).

The receiver selects the set of slices 901 that constitute the view to be displayed and retrieves them in the different transport streams by means of the information embedded in the program streams. Since in this embodiment each view is composed of ten slices, the receiving apparatus shall receive ten program streams that can be multiplexed in a plurality of transport streams transmitted on different frequency bands. Receiving apparatus therefore is preferably provided with a plurality of tuners to tune on different bands and simultaneously receive the different transport streams. Clearly only one tuner would be necessary if all the program streams are multiplexed in the same transport stream, which could be possible due to the reduced dimension of each program stream.

The selected encoded slices are then provided to a decoder 902 that individually decodes each of the selected slices of set 901, to generate a decoded video image 903. Video image 903 comprises the selected view 801, after the plurality of selected slices of the set 901 have been decoded. Video image 903 can be displayed on a conventional TV screen and represents the selected view 801 of the multiview video 100.

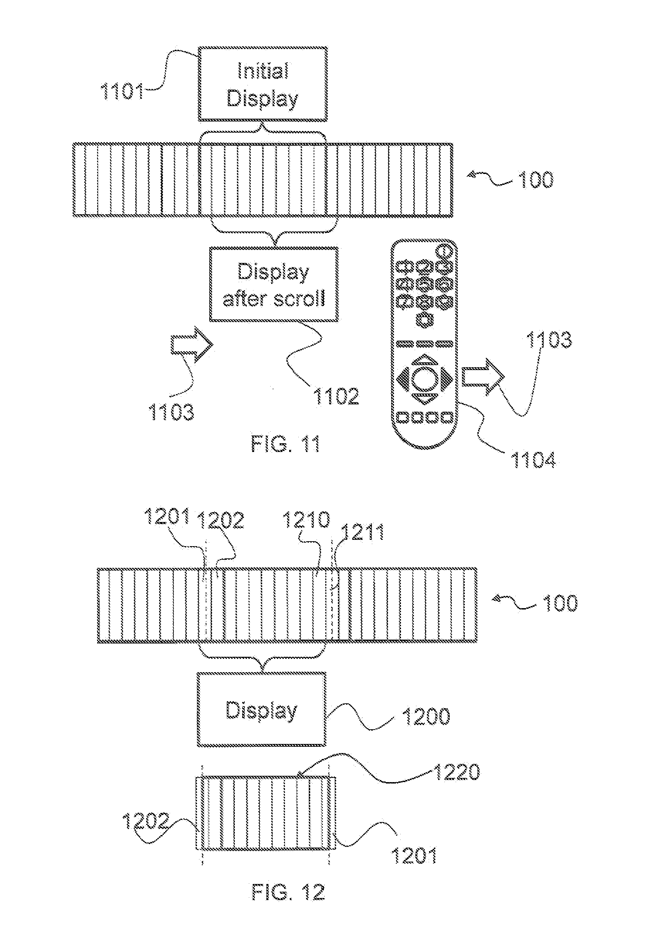

With reference to Figure 11, an example of interactive selection by the user of the view to be displayed is described.

In a preferred embodiment, upon receiving a MVV video on a new channel, initial default view 1101 is displayed to the user. Default view 1101 is preferably one of the original views of the multiview video stream 100, i.e. one of the images transported by the frames of video streams 101-103. Preferably, in case of a panorama view, like panorama image 1, the default view comprises the centre of the image 1.

According to what has been already described, the user can interactively change the view to be displayed. For this purpose the user can operate a remote control 1104 for navigating through the views of multiview video 100 by providing a scroll command 1103 on a chosen direction, in this case the right direction. This scroll command 1103 causes the selection of another view 1102 to be displayed.

In the example of figure 11 the user presses the "right arrow" key on remote control 1104, causing the selected view to shift of one slice to the right side of multiview video 100. The new selected view 1102 comprises a different set of slices of the multiview video 100. The new slices are then decoded and an image to be displayed on the TV screen is generated, said image being representative of the new selected view 1102.

By this procedure, the user can navigate through different views of multiview video 100, scrolling the images in a very intuitive manner, almost like as if he was moving his head to left and right in a real world panorama.

It is clear that the above steps merely exemplify the interaction of the user with the multiview video. Other possibilities can be considered, for example the user can keep changing the view from selected view 1102 to a further view, simply by pressing several times certain keys of the remote control 1104.

In one embodiment, the default view 1101 can be either automatically selected as one predetermined view among the plurality of images of a specific video stream, or as the view that the user selected on the last time that the specific multiview channel (or multiview video stream) was selected.

In one embodiment, a piece of information concerning the position of the default view 1101 is embedded (and transmitted) in multiview video 100, so that the content provider can give a predetermined indication on which view is to be considered as default view for each instant of the multiview video.

With reference to Figure 12, another embodiment of the present invention regarding interactive selection of the view to be displayed is described. In this embodiment, the user can interactively navigate the multiview video 100, selecting different views by scrolling images using incremental steps that are different from a whole slice, for example larger or smaller than a slice.

In this example, the user is first viewing a displayed image which comprises slices from 1201 to 1210. User than scrolls the image to view a new view 1200 so as to include a view that comprises information from slices 1201 and 761; in detail, the new view comprises pixels from slices 1201 and 1211 that are only partially selected. This can happen whenever a continuous scrolling movement of the view, moving on smaller pixel-spans, is commanded by the user. The user can impart this command by the remote control, for example by toggling a different "continuous" navigation mode and pressing the same key, or pressing the key with less force, or rotating a knob.

In this case, in order to display the selected view 1200, the decoder needs to decode the eleven slices comprised in the selection. In fact, the decoder needs to consider and decode each slice individually, and if video information from at least part of a slice is needed, the whole slice needs to be decoded. Only the necessary pixels are then used to generate image 1203 corresponding to the selected view 1200.

In this example, since eleven slices are to be decoded to display the selected view 1200, decoder needs a computational power which is only 10% more of the power that would be normally requested to decode a single frame.

In general the number of slices in which a video is divided is determined as a trade-off between computational power saved by having thin slices, and amount of information needed to reconstruct the configuration of the slices. In practice, it is found that an appropriate number of slices for dividing an HD frame is comprised between 7 and 12, more preferably it is 9 or 10.

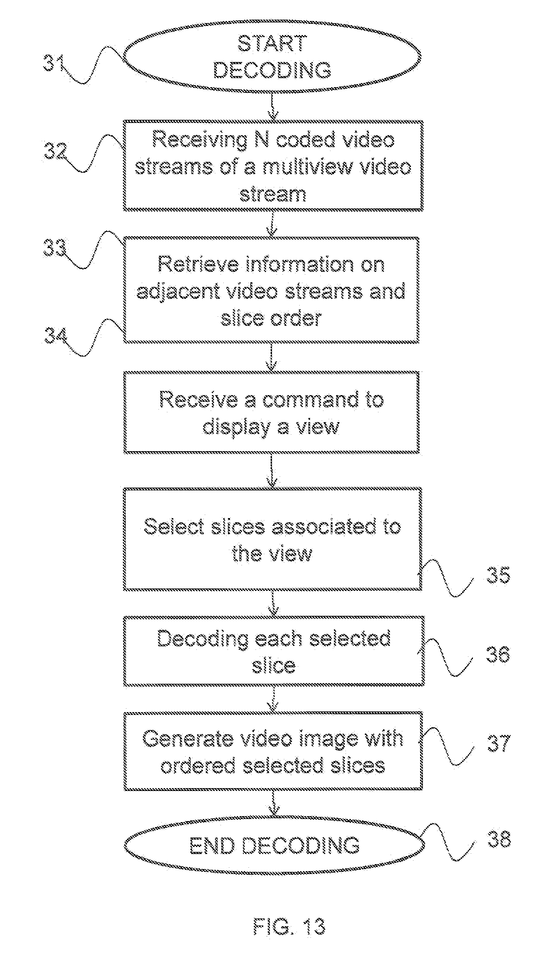

Figure 13 schematically represents a flowchart for the decoding method according to an embodiment of the present invention.

The decoding method is initiated at step 31. A plurality of coded video streams is received at step 32; these coded video streams (for example video streams 101, 102 and 103) represent a multiview video according to the present invention (for example multiview video 100).

As already described, the multiview video stream comprises information that allows determining the configuration of separate video streams to be considered adjacent, and of the slices within each image of each video stream; these pieces of information are retrieved at step 33, preferably from the metadata of video 100. A command to display a particular view of the multiview video stream is received at step 34; this command can be automatically generated or being representative of a user's selection.

Using the information previously retrieved, the slices associated to the view to be displayed are selected at step 35. Each of the selected slices is individually decoded (step 36) and a video image is then generated (step 37), assembling the selected slices, now decoded, in the correct order. At step 38, decoding of an image of a multiview video stream, according to a particular view to be displayed, is terminated.

Further steps, like cropping of images (e.g. to remove added lines of pixels), rotation of images (to take account of rotations carried out during encoding), can be added to the decoding method of figure 13.

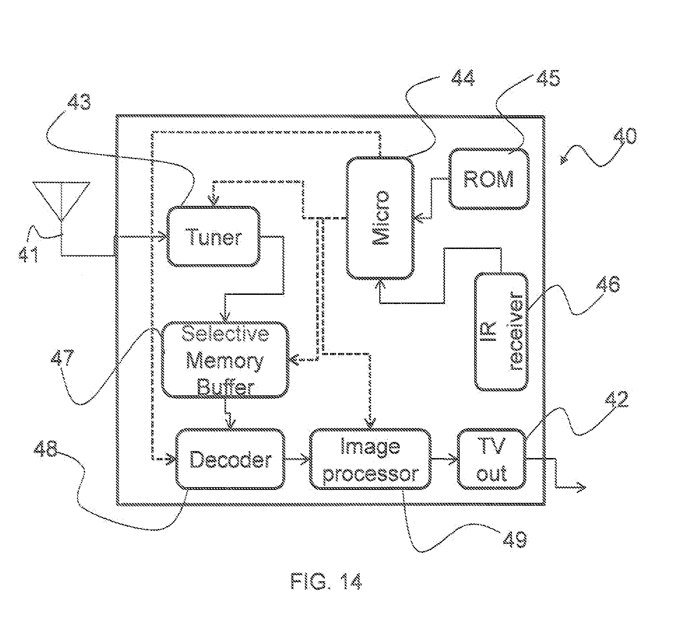

Figure 14 schematically represents a decoding apparatus, such a as a Set-top-box, for decoding a multiview video stream according to the present invention. The decoding apparatus 40 is a Set-top-box provided with a video output 42 to transmit video contents to an external device that will display them.

Decoding apparatus 40 comprises a tuner 43, adapted to be connected to an antenna 41 and to receive a plurality of separate coded video streams representing a multiview video stream. For example, tuner 43 is adapted to receive video streams transported in a DVB digital video transport stream. Set-top-box 40 is suitable for receiving and decoding a MVV encoded according to the embodiment of figure 14, wherein the same DVB transport stream comprises three program streams each carrying elementary packets respectively of video streams 101, 102 and 103.

Decoding apparatus 40 further comprises a microcontroller 44, operatively connected to a number of other components of the decoding apparatus 40. The microcontroller 44 works as control unit of the receiving apparatus and controls tuner 43 to tune on the transport stream corresponding to the request of the user. Decoding apparatus 40 further comprises a memory 45, operatively connected to the microcontroller 44. Memory 45, for example a ROM memory, contains the information and algorithms needed to perform the decoding method according to the present invention.

Decoding apparatus 40 further comprises a command receiver 46, for example an infrared receiver associable to an IR remote control.

The microcontroller 44 is operationally connected to the command receiver 46 to receive user commands, e.g. commands for tuning on a "TV channel" wherein interactive videos can be watched and navigated, as well as commands to modify the view of interactive video.

Decoding apparatus 40 further comprises a memory buffer 47 for storing a plurality of program stream packets of an encoded multiview video stream.

In operation, the user provides via remote control a command to tune on an interactive TV channel wherein views of a multiview video can be selected. As an example user presses key number one to view channel CH1. Microcontroller 44 controls tuner 43 to tune on the transport stream transporting the default image of a multiview video signal. Preferably microcontroller 44 controls tuner 43 to tune on a desired frequency to receive a program stream associated to CH1. Microcontroller 44 retrieves the encoded slices associated to the default view or to a view selected by the user after tuning on CH1 and controls the buffer memory 47 to provide the selected slice to decoder 48.

Decoder 48 individually decodes the slices passed from the memory buffer 47 according to the commands provided by microcontroller 44.

Processor 49 receives the decoded slices and assembles them so as to generate an image corresponding to the view to be displayed, providing a juxtaposition of the slices according to the correct order, and a rotation of the slices if relative information is found in the metadata.

Processor 49 is than connected to a TV output port 42 to provide an output video signal.

As an alternative, the decoding apparatus 40 could also be integrated in a TV set, therefore avoiding the use of the TV output 42.

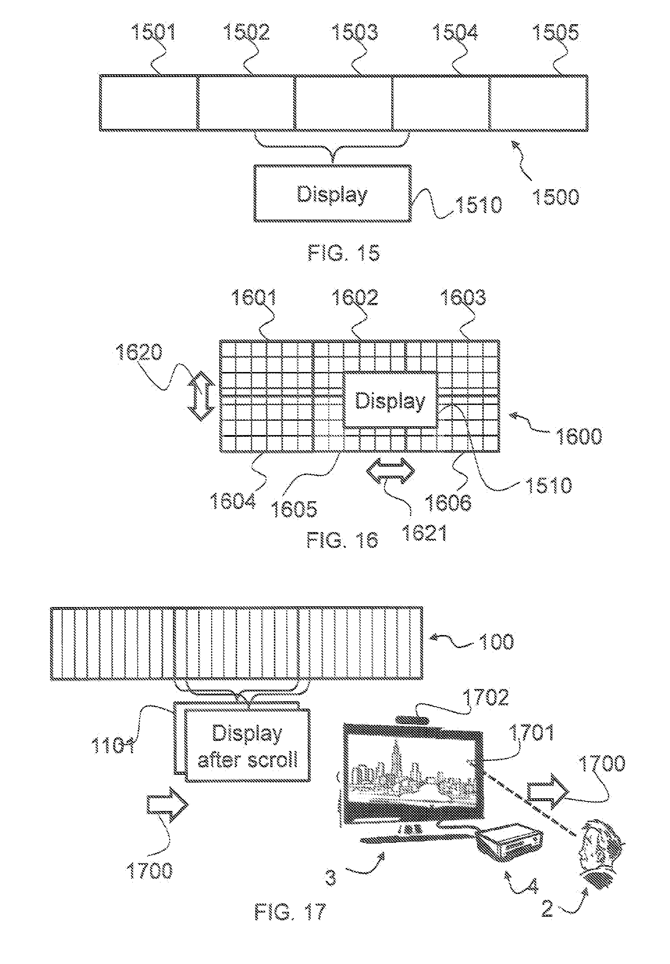

In a further alternative embodiment of the present invention, the decoding apparatus 40 comprises a plurality of tuners allowing reception a plurality of program streams broadcast on a plurality of DVB transport streams. This solution is advantageous in the case of extremely large multiview video, comprising a number of video streams that cannot be transported in a single transport stream, or in case of MVV encoded according to the embodiment of figure 15, wherein each frame is divided into a number of slices that are then encoded and embedded in different program streams that cannot be transported in a single transport stream.

With reference to Figure 15, another embodiment of the methods for coding and decoding according to the present invention is described.

The multiview video 1500 comprises images corresponding to five video streams 1501, 1502, 1503, 1504, 1505 of normal size, juxtaposed side by side so as to form a panoramic video, for example comprising a 360 degrees view of a panorama.

The multiview video 1500 is coded and decoded according to the present invention, individually coding a plurality of slices in which each of images of the video streams 1501, 1502, 1503, 1504, 1505 is divided, and individually decoding the slices comprised in a selection 1510. In this example, the multiview video is to be displayed according to a selected view 1510, on a TV screen having an aspect ratio of 2.39:1 that is larger than full HD 16:9. The selection 1510 can be displayed either on a panoramic cinema-like display or on a plurality of regular displays arranged side by side.

The selection of the view 860 to be displayed from the multiview video 1500 comprises slices from video streams 1502 to 1504. In this case, as described before, the slices comprised in the selection 1510 are individually decoded to save computational power to the decoder, and to provide a better interactive experience to the user that can navigate through different views.

With reference to Figure 16, another embodiment of the methods for coding and decoding according to the present invention is described.

The multiview video 1600 comprises images corresponding to six video streams 1601, 1602, 1603, 1604, 1605, 1606 of normal size, juxtaposed in a 2x3 matrix so as to form an enlarged screen that can be "navigated" interactively by the user, that commands the MVV Set-top-box to select a particular view 1610 by vertical scrolls 1620 and/or horizontal scrolls 1621.

The multiview video 1600 is coded and decoded according to the present invention, individually coding a plurality of tiled slices in which each of the video 1601, 1602, 1603, 1604, 1605, 1606 is divided, and individually decoding the slices comprised in a selection 1610. In this example the slices are tiled according to a grid, so as to allow the navigation of the display on the two directions, both horizontal and vertical.

According to the present invention the slices are individually encoded, and decoded when comprised in the selected view; the slices can have different sizes between each other, as in the example of Figure 16, where appropriate or advantageous.

With reference to Figure 17, another interactive selection of the view to be displayed is now described.

According to another embodiment of the present invention, the user 2 commands the selection of the view 1102 in the multiview video 100. The view 1102 is scrolled by the user, along a direction 1700 as described with reference to Figure 2, simply when the user focuses his gaze on an edge 1701 of the observed TV screen 15. The movement of the user's eyes is detected by a camera and a processor 993, that commands the MVV Set-top-box to shift the display window according to the shifting direction 1103b to show the user 2 the selection 1102, in the direction where his gaze was pointing.

The present invention provides for a coding method of a multiview video, that allows for an efficient coding of a multiview video stream into a plurality of slices individually encoded. The slices are then broadcasted to the final user, that receives them, decodes them and assembles them according to the information relative to their correct configuration. The slices are individually decoded, in order to provide the user with an interactive experience, while choosing a particular view of the video and allowing for a more efficient use of the computational power of the decoder, that does not need to decode slices that are extraneous to the selection of interest.

The method according to the invention, as merely exemplified in the present description, is susceptible of a number of changes and variants falling within the inventive concept as defined by the appended claims. All the implementing details given can be replaced by their known technical equivalents, without departing from the scope of the present invention.

It also clear that the invention is directed to a computer program comprising program code means for performing all the steps of a coding method with the features as above described and as claimed, when it is run on a computer. According to a further aspect, the invention is directed to computer readable medium storing computer executable instructions performing all the steps of a coding method with the features as above described and as claimed, when it is run on a computer.

According to a further aspect, the invention is directed to a computer program comprising program code means for performing all the steps of a decoding method with the features as above described and as claimed, when it is run on a computer.

According to a further aspect, the invention is directed to computer readable medium storing computer executable instructions performing all the steps of a decoding method with the features as above described and as claimed, when it is run on a computer.

## Claims

1. **Method for coding** a multiview video stream (100) comprising a plurality of images (104, 105, 106) corresponding to single views of a scene (1) in a fixed time instant, **characterized by** comprising the steps of:
a) Dividing each of said images (104, 105, 106) in a plurality of slices;
b) Coding (502, 611) each of said slices;
c) Generating a multiview video stream (100) comprising a plurality of separate video streams (101, 102, 103), each of said separate video streams (101, 102, 103) comprising
i. a set of said coded slices (401),
ii. first information (107a) adapted to define the position of said slices (401) in said images (104, 105, 106) and
iii. second information (107b) adapted to identify at least one video stream (101, 103) of said multiview video stream (100), said at least one identified video stream (101, 103) comprising at least one slice (404, 405) that, in said scene (100), is adjacent to a slice of said set (401).

2. Method for coding a multiview video stream according to claim 1, wherein said scene develops over a main direction (X) and wherein said slices (401) are obtained by sectioning said plurality of images (104, 105, 106) along a transversal direction (Y) that is orthogonal to said main direction (X).

3. Method for coding a multiview video stream according to claim 2, wherein said main direction (X) is horizontal, and wherein said coding step (502) comprises the steps of implementing a 90 degrees rotation (501) of each of said slices (104) and coding the rotated slices (104b).

4. Method for coding a multiview video stream according to claim 3, wherein a third information representative of said rotation (501) is inserted is said multiview video stream (105).

5. Method for coding a multiview video stream according to any one of claims 1 to 4, wherein each of said images (104, 105, 106) is divided in at least ten slices (401).

6. Method for coding a multiview video stream according to claim 5, wherein said slices are rectangular and have sizes that are multiple of sixteen pixels.

7. Method for coding a multiview video stream according to any of claims 1 to 6, wherein said first information (107a) comprises a plurality of identification codes (PID), in particular Packet ID codes, assigned respectively to each of said slices (601, 602, 610).

8. **Coding apparatus** for coding a multiview video stream, **characterized in that** it comprises means adapted to implement the method according to any one of claims 1 to 7.

9. **Method for decoding** a multiview video stream (100) coded according to a method according to any of claims 1 to 7, comprising the steps of:
a) Receiving said plurality of coded video streams (504, 652, 505);
b) Receiving a command (1103, 1103b) to display a view (801, 1102, 1200) of said scene, said view to be displayed (801, 1102, 1200) comprising slices (805) belonging to at least two of said images (104, 105);
c) Selecting the slices (805) associated to said view to be displayed (801, 1102, 1200) based on the received command (1103, 1103b) and on said first and second information (107a, 107b);
d) Decoding (802, 902) each of the selected slices (805);
e) Generating a video image (805, 903, 1203) comprising at least part of the selected slices (805) ordered so as to generate the view to be displayed (801, 1102, 1200).

10. Method for decoding a multiview video stream according to claim 9, further comprising the steps of:
- checking in said multiview video stream (100) the presence of information indicative that said slices have undergone a 90 degrees rotation (501),
- in case selected slices have undergone to said 90 degrees rotation (501), applying an opposite rotation (804) to the decoded slices (803) before generating said video image (805).

11. Method for decoding a multiview video stream according to claim 9 or 1, further comprising the step of displaying a first video image (1101) corresponding to one of said plurality of images, receiving a command (1104) from the user to scroll said first video image (1101) in a predetermined direction (1103), associating to said command (1104) a second view (1102) to be displayed, selecting and decoding the slices of said second view (1102) based on said first (107a) and said second information (107b), generating a second video image corresponding to said second view after said scroll.

12. Method for decoding a multiview video according to any one of claims 9 to 2, wherein said view to be displayed (1200) comprises only part of at least one (1201, 1202) of said selected slices, and wherein said generated video image (1203) comprises a number of pixels smaller than the number of pixels of said selected slices.

13. **Decoding apparatus** (4, 40) for decoding a multiview video stream, comprising at least one tuner (43), a decoder (48), a memory buffer (47) and a control unit (44), wherein said tuner (43) is operatively connected to said memory buffer (47) to provide a plurality of coded video streams (504, 652, 505) to said memory buffer (47), and said control unit (44) is operatively connected to said tuner (43) and to said memory buffer (47) to retrieve further information (107a, 107b) from said plurality of coded video streams (504, 652, 505), **characterized in that** said decoding apparatus (4, 40) further comprises a command receiver (42) for receiving a command relative to a view of said multiview video stream to be displayed, and **in that** said control unit (44) is operatively connected to said memory buffer (47) to select a plurality of individually coded slices (1102) from said plurality of coded video streams (504, 652, 505) according to said further information (107a, 107b) and according to said view to be displayed, and **in that** said decoder (48) is adapted to decode each of selected slices (1102) to generate a video image to be displayed.

14. Decoding apparatus according to claim 4, wherein further comprising a memory area (45) storing code portions that once run by said control unit (44) implements the method according to any one of claims 9 to 3.

## Amended claims

### Amended claims in accordance with Rule 137(2) EPC.

**1. Method for coding** a multiview video stream (100) comprising a plurality of images (104, 105, 106) corresponding to single views of a scene (1) in a fixed time instant, wherein said scene develops over a main horizontal direction (X), **characterized by** comprising the steps of:
a) Dividing each of said images (104, 105, 106) in a plurality of slices obtained by sectioning said plurality of images (104, 105, 106) along a transversal direction (Y) that is orthogonal to said main horizontal direction (X);
b) Implementing a 90 degrees rotation (501) of each of said slices (104) and Coding (502, 611) each of said rotated slices (104b);
c) Generating a multiview video stream (100) comprising a plurality of separate video streams (101, 102, 103), each of said separate video streams (101, 102, 103) comprising:
i. a set of said coded slices (401);
ii. first information (107a) adapted to define the position of said slices (401) in said images (104, 105, 106);
iii. second information (107b) adapted to identify at least one video stream (101, 103) of said multiview video stream (100), said at least one identified video stream (101, 103) comprising at least one slice (404, 405) that, in said scene (100), is adjacent to a slice of said set (401); and
iv. a third information representative of said rotation (501) of said slices (104).

**2.** Method for coding a multiview video stream according to claim 1, wherein each of said images (104, 105, 106) is divided in at least ten slices (401).

**3.** Method for coding a multiview video stream according to claim 2, wherein said slices are rectangular and have sizes that are multiple of sixteen pixels.

**4.** Method for coding a multiview video stream according to any of claims 1 to 3, wherein said first information (107a) comprises a plurality of identification codes (PID), in particular Packet ID codes, assigned respectively to each of said slices (601, 602, 610).

**5. Coding apparatus** for coding a multiview video stream, **characterized in that** it comprises means adapted to implement the method according to any one of claims 1 to 4.

**6. Method for decoding** a multiview video stream (100) coded according to a method according to any of claims 1 to 4, comprising the steps of:
a) Receiving said plurality of coded video streams (504, 652, 505);
b) Receiving a command (1103, 1103b) to display a view (801, 1102, 1200) of said scene, said view to be displayed (801, 1102, 1200) comprising slices (805) belonging to at least two of said images (104, 105);
c) Selecting the slices (805) associated to said view to be displayed (801, 1102, 1200) based on the received command (1103, 1103b) and on said first and second information (107a, 107b);
d) Decoding (802, 902) each of the selected slices (805);
e) checking in said multiview video stream (100) the presence of information indicative that said slices have undergone a 90 degrees rotation (501);
f) in case selected slices have undergone to said 90 degrees rotation (501), applying an opposite rotation (804) to the decoded slices (803) before generating said video image (805);
g) Generating a video image (805, 903, 1203) comprising at least part of the selected slices (805) ordered so as to generate the view to be displayed (801, 1102, 1200).

**7.** Method for decoding a multiview video stream according to claim 6, further comprising the step of displaying a first video image (1101) corresponding to one of said plurality of images, receiving a command (1104) from the user to scroll said first video image (1101) in a predetermined direction (1103), associating to said command (1104) a second view (1102) to be displayed, selecting and decoding the slices of said second view (1102) based on said first (107a) and said second information (107b), generating a second video image corresponding to said second view after said scroll.

**8.** Method for decoding a multiview video according to any one of claims 6 or 7, wherein said view to be displayed (1200) comprises only part of at least one (1201, 1202) of said selected slices, and wherein said generated video image (1203) comprises a number of pixels smaller than the number of pixels of said selected slices.

**9. Decoding apparatus** (4, 40) for decoding a multiview video stream, comprising at least one tuner (43), a decoder (48), a memory buffer (47) and a control unit (44), wherein said tuner (43) is operatively connected to said memory buffer (47) to provide a plurality of coded video streams (504, 652, 505) to said memory buffer (47), and said control unit (44) is operatively connected to said tuner (43) and to said memory buffer (47) to retrieve further information (107a, 107b) from said plurality of coded video streams (504, 652, 505), wherein said decoding apparatus (4, 40) further comprises a command receiver (42) for receiving a command relative to a view of said multiview video stream to be displayed, and in that said control unit (44) is operatively connected to said memory buffer (47) to select a plurality of individually coded slices (1102) from said plurality of coded video streams (504, 652, 505) according to said further information (107a, 107b) and according to said view to be displayed, and in that said decoder (48) is adapted to decode each of selected slices (1102) to generate a video image to be displayed, **characterized in that** said decoding apparatus (4, 40) further comprises a memory area (45) storing code portions that once run by said control unit (44) implements the method according to any one of claims 6 to 8
